(19) **Europäisches Patentamt**
**European Patent Office**
**Office européen des brevets**

(11) **EP 2 457 440 B1**

(12) **FASCICULE DE BREVET EUROPEEN**

(45) Date de publication et mention
de la délivrance du brevet:
**30.05.2018 Bulletin 2018/22**

(51) Int Cl.:
*A01N 25/10* *(2006.01)*          *A01N 25/34* *(2006.01)*
*A01N 59/16* *(2006.01)*          *A01N 33/12* *(2006.01)*
*A01N 41/10* *(2006.01)*          *A01N 47/12* *(2006.01)*
*B42D 15/00* *(2006.01)*

(21) Numéro de dépôt: **11160846.9**

(22) Date de dépôt: **08.04.2003**

(54) **Support d'information présentant des propriétés biocides et son procède de fabrication**

Datenträger, der Biozideigenschaften aufweist, und sein Herstellungsverfahren

Information medium with biocidal properties and method for manufacturing same

(84) Etats contractants désignés:
**AT BE BG CH CY CZ DE DK EE ES FI FR GB GR
HU IE IT LI LU MC NL PT RO SE SI SK TR**

(30) Priorité: **08.04.2002 FR 0204363**

(43) Date de publication de la demande:
**30.05.2012 Bulletin 2012/22**

(62) Numéro(s) de document de la (des) demande(s)
initiale(s) en application de l'article 76 CBE:
**03740577.6 / 1 494 529**

(73) Titulaire: **Oberthur Fiduciaire SAS
75008 Paris (FR)**

(72) Inventeurs:
• **Jayet-Laraffe, Christiane
26140 Andancette (FR)**

• **Rosset, Henri
38730 Le Pin (FR)**

(74) Mandataire: **Nony
11 rue Saint-Georges
75009 Paris (FR)**

(56) Documents cités:
**JP-A- 6 313 269      US-A- 5 962 137
US-A- 6 093 407**

Remarques:
Le dossier contient des informations techniques
présentées postérieurement au dépôt de la demande
et ne figurant pas dans le présent fascicule.

**Description**

L'invention concerne un support d'information destiné à être manipulé relativement fréquemment, en particulier un billet de banque.

De manière plus spécifique, l'invention concerne un support d'information présentant des propriétés biocides et son procédé de fabrication.

Dans les sociétés modernes, une quantité de plus en plus importante de supports destinés à transmettre des informations est manipulée quotidiennement et fréquemment par un grand nombre de personnes, pour lesquelles aucun contrôle sanitaire n'est exigé.

Or, ces personnes, dû fait de leur environnement, de leur activité professionnelle, de leur entourage ou de leur hygiène de vie, peuvent être porteuses de germes, de microbes et d'agents de contamination en général, générateurs de maladies épidémiques et pandémiques plus ou moins graves.

Ainsi, le support d'information manipulé par ces personnes est, à son tour, susceptible de contenir de tels microorganismes pathogènes.

Il devient alors un important véhicule de dissémination de bactéries, levures et champignons et peut potentiellement provoquer des infections chez ceux qui le manipulent.

En outre, récemment, la possibilité d'une action terroriste par contamination bactériologique de tels supports d'information n'étant plus à négliger, le risque lié à la manipulation de tels supports d'information devient particulièrement sensible.

En tant que monnaie d'échange lors des transactions commerciales, le billet de banque constitue l'un des supports d'information les plus manipulés au monde et représente, de ce fait, une menace potentielle pour notre santé.

Dans de nombreux pays, les billets sont manipulés des milliards de fois pendant leur durée de circulation.

Ils se chargent alors de microorganismes provenant à la fois du milieu ambiant et de l'organisme humain.

Une étude menée par l'Institut de Recherches biochimiques Gazaga da Gama Filho au Brésil sur la contamination microbienne des billets de banque brésiliens et présentée le 28 septembre 2001 a révélé notamment la présence de deux agents contaminants particuliers, le Staphylococcus sp et l'Escherichia Coli.

La présence de ces deux microorganismes peut entraîner pour celui qui manipule le billet de banque diverses infections, qui vont des maladies superficielles, telles que les piodermites, jusqu'aux orgelets, otites, sinusites, pharyngintes et autres affections plus graves en fonction des lieux de pénétration, des quantités, de la virulence de l'échantillon, et de la résistance individuelle.

Dans ce contexte, la tendance qui se fait jour d'un allongement de la durée de vie du billet de banque ne peut qu'aggraver, pour le futur, le risque de contamination lié à la manipulation de ces billets.

Le problème de la contamination des supports d'information en général, et des billets de banque en particulier, bien que n'étant pas réellement nouveau, n'a pourtant pas jusqu'à présent, à la connaissance de la Demanderesse, fait l'objet de recherches exhaustives suffisantes.

L'étude précédemment citée mentionne tout d'abord la possibilité d'utiliser un matériau plastique en lieu et place du matériau fibreux cellulosique traditionnel pour la fabrication desdits billets de banque.

La demande de brevet US 5,962,137 décrit des cartes plastiques comprenant un unique agent antibactérien.

La demande de brevet JP 06-313,269 décrit un tissu synthétique recouvert d'une résine imprégnée d'une combinaison d'agents fongiques.

La demande de brevet US 6,093,407 décrit une poudre antimicrobienne comprenant un agent antimicrobien dispersé dans des particules d'une résine plastique, laquelle peut comprendre un mélange de deux agents bactériens, respectivement le dibromocyanoacétamide et le 3,5-diméthyltetrahydro-1,3,5-2H-thiazine-2-thione.

Le matériau fibreux cellulosique ayant une tendance à absorber l'humidité favoriserait le développement des microorganismes en son sein.

Or, l'étude montre que ce changement réduit mais n'écarte pas le risque de contamination.

D'autres solutions techniques ont été divulguées récemment dans l'art antérieur et consistent en fait à traiter le papier billet de banque avec un agent antimicrobien.

La demande de brevet WO 95/42658 envisage en particulier l'ajout d'un agent antimicrobien substantif à base de biguanide.

Or, la demanderesse a constaté que ces solutions antérieures soit ne répondent pas complètement au problème posé, l'agent antimicrobien n'ayant pas une action biocide totale, c'est-à-dire à la fois antifongique et antibactériologique, soit répondent au problème posé au prix d'une addition importante d'agent antimicrobien.

Ces solutions antérieures s'avèrent donc inefficaces et trop chères.

De plus, les agents antimicrobiens se caractérisent en général par un degré de toxicité ; leur ajout à forte dose peut donc s'avérer inadapté, voire dangereux.

L'invention vise donc à fournir un support d'information présentant des propriétés à la fois antifongiques et antibactériologiques, et ne présentant pas les inconvénients de l'art antérieur.

La Demanderesse, après avoir testé de nombreuses compositions biocides, est parvenue, de façon surprenante, à résoudre les problèmes posés en traitant le support d'information à l'aide d'un mélange de deux agents biocides, l'un ayant une action fongistatique et/ou fongicide, l'autre ayant une action bactériostatique et/ou bactéricide.

Il s'est avéré aussi que parmi les agents antiseptiques testés, certains pouvaient présenter les deux actions en même temps.

Ainsi, l'invention fournit un support d'information destiné à être manipulé relativement fréquemment, destiné à la fabrication d'un billet de banque, caractérisé en ce qu'il contient au moins du chlorure de didécyl diméthyl ammonium à titre d'agent bactériostatique et/ou bactéricide et du p-[(Diiodométhyl) sulfonyl] toluol sous forme de dispersion aqueuse ou de l'iodopropynyl butylcarbamate sous forme de dispersion aqueuse à titre d'agent fongistatique et/ou fongicide.

Le support peut également contenir un agent bactériostatique et/ou bactéricide est choisi parmi les composés à base de chitosan ou dérivés de chitine, d'ammonium quaternaire, de zéolithe de zinc, d'ions argent et de triclosan.

De préférence, au moins un agent fongistatique et/ou fongicide est choisi parmi les composés à base d'isothiazolin ou dérivés d'isothiazolone, de chitosan ou dérivés de chitine, d'ammonium quaternaire, de zéolithe de zinc, d'ions d'argent et de triclosan.

De préférence, la quantité en poids sec d'agent biocide dans le support est inférieure à 1 %, et de préférence inférieure à 0,2 %.

De préférence, après une heure de contact dynamique du support avec une souche d'Eschérichia Coli ou de Staphylococcus Aureus, le pourcentage de réduction de l'activité des souches correspondantes est supérieur à 99,9 %, dans les conditions définies par la méthode ASTM E 2149-01.

De préférence aussi, après 24 heures de contact dynamique du support avec une souche d'Eschérichia Coli ou de Staphylococcus Aureus, l'activité antibactérienne définie par la méthode XPG 39010 est négative.

Dans un mode de réalisation, le support d'information est formé à base de matériaux cellulosiques, notamment du papier.

Dans un autre mode de réalisation, le support d'information est base de matériaux plastiques.

De préférence, le support d'information est destiné à la fabrication d'un billet de banque, d'un passeport, d'une carte à jouer, d'une carte à puce, d'un emballage, d'un livre ou d'un magazine.

Un autre objet de l'invention concerne un procédé de fabrication du support d'information précédemment cité, caractérisé en ce qu'au moins un agent biocide est incorporé à un support de base formé de matériaux cellulosiques et/ou plastiques.

L'incorporation dudit agent biocide dans le support de base peut se faire de diverses manières :

- par immersion dudit support de base dans une solution dudit agent biocide,
- par pulvérisation dudit support de base avec une solution dudit agent biocide,
- par impression dudit support de base à l'aide d'une encre contenant ledit agent biocide,
- par surfaçage dudit support de base avec une solution contenant ledit agent biocide et un agent de surfaçage aqueux, l'agent de surfaçage aqueux incorporant de préférence de la glycérine comme plastifiant,
- par couchage dudit support de base avec une solution de couchage contenant ledit agent biocide,
- par dépôt sur ledit support de base d'un vernis de surimpression contenant ledit agent biocide,
- par enduction de microcapsules ou de cyclodextrine contenant ledit agent biocide sur ledit support de base.

Les exemples non limitatifs suivants, permettront de mieux comprendre comment l'invention peut être mise en pratique et ses avantages.

EXEMPLE 1 comparatif :

On forme une feuille de papier sur une machine à papier dite de forme ronde avec une toile comportant un motif permettant de faire un filigrane, ce papier pouvant convenir comme papier pour fabriquer un billet de banque, de la façon suivante :

- on met en suspension dans de l'eau une pâte de fibres de coton, on raffine cette suspension à 60° SCHOEPPER-RIEGLER,
- on ajoute un agent de résistance humide, environ 2,5% en poids sec d'une résine poly(amide-amine-epychlorhydrine), exprimés par rapport aux fibres de coton,
- on introduit également dans cette suspension des planchettes iridescentes,
- on introduit lors de la formation de la feuille, un fil de sécurité microimprimé dit "window thread", selon les techniques antérieures connues de manière à faire apparaître ce fil dans certaines fenêtres à la surface du papier. Une méthode utilisable pour introduire ce fil est décrite par exemple dans le brevet EP59056.
- après avoir formé la feuille, on la traite en surface en presse encolleuse par un agent de collage.

- on sèche la feuille vers 100°C.

EXEMPLE 2 comparatif :

On reprend un support selon l'exemple 1 que l'on imprègne dans un bac d'imprégnation contenant une composition réalisée en milieu aqueux qui comporte :

- 98 parts en poids commercial d'un liant PVA,
- 2 parts en poids commercial d'un agent biocide à base d'isothiazolin commercialisé sous la référence « MICROBIOCIDE B43F » par la société INTACE.

La concentration d'agent biocide par rapport au bain total est réglée à 0,05 %.
Le pH de la composition d'imprégnation est fixé à 6,6.
Une fois imprégné, le papier comporte un taux en poids commercial de produit biocide de 0,037 %, ce qui correspond à un taux en poids sec de produit biocide dans le papier d'environ 0,02 %.

EXEMPLE 3 comparatif:

On reprend un support selon l'exemple 1 que l'on imprègne dans un bac d'imprégnation contenant une composition réalisée en milieu aqueux qui comporte :

- 94 parts en poids commercial d'un liant PVA,
- 6 parts en poids commercial d'un agent biocide à base d'isothiazolin commercialisé sous la référence « MICROBIOCIDE B43F » par la société INTACE.

La concentration d'agent biocide par rapport au bain total est réglée à 0,2 %.
Le pH de la composition d'imprégnation est fixé à 6,6.
Une fois imprégné, le papier comporte un taux en poids commercial de produit biocide de 0,14 %, ce qui correspond à un taux en poids sec de produit biocide dans le papier d'environ 0,07 %.

EXEMPLE 4 comparatif :

On reprend un support selon l'exemple 1 que l'on imprègne dans un bac d'imprégnation contenant une composition réalisée en milieu aqueux qui comporte :

- 75 parts en poids commercial d'un liant PVA,
- 25 parts en poids commercial d'un agent biocide à base de chitosan commercialisé sous la référence « CHITOGEL » par la société FRANCE CHITINE.

La concentration d'agent biocide par rapport au bain total est réglée à 1,0 %.
Le pH de la composition d'imprégnation est fixé à 6,8.
Une fois imprégné, le papier comporte un taux en poids commercial de produit biocide de 0,75 %, ce qui correspond à un taux en poids sec de produit biocide dans le papier d'environ 0,4 %.

EXEMPLE 5 comparatif :

On reprend un support selon l'exemple 1 que l'on imprègne dans un bac d'imprégnation contenant une composition réalisée en milieu aqueux qui comporte :

- 70 parts en poids commercial d'un liant PVA,
- 30 parts en poids commercial d'un agent biocide à base de chitosan commercialisé sous la référence « CHITOSAN 241 » par la société FRANCE CHITINE.

La concentration d'agent biocide par rapport au bain total est réglée à 1,25 %.
Le pH de la composition d'imprégnation est fixé à 5,2.
Une fois imprégné, le papier comporte un taux en poids commercial de produit biocide de 0,925 %, ce qui correspond à un taux en poids sec de produit biocide dans le papier d'environ 0,5 %.

EXEMPLE 6 comparatif :

On reprend un support selon l'exemple 1 que l'on imprègne dans un bac d'imprégnation contenant une composition réalisée en milieu aqueux qui comporte :

- 94 parts en poids commercial d'un liant PVA,
- 6 parts en poids commercial d'un agent biocide à base de chlorure de didécyl diméthyl ammonium commercialisé sous la référence « MICROBIOCIDE B74 » par la société INTACE.

La concentration d'agent biocide B74 par rapport au bain total est réglée à 0,2 %.
Le pH de la composition d'imprégnation est fixé à 6,4.
Une fois imprégné, le papier comporte un taux en poids commercial de produit biocide de 0,142 %, ce qui correspond à un taux en poids sec de produit biocide dans le papier d'environ 0,07 %.

EXEMPLE 7 comparatif :

On reprend un support selon l'exemple 1 que l'on imprègne dans un bac d'imprégnation contenant une composition réalisée en milieu aqueux qui comporte :

- 88 parts en poids commercial d'un liant PVA,
- 6 parts en poids commercial d'un agent biocide à base de chlorure de didécyl diméthyl ammonium commercialisé sous la référence « MICROBIOCIDE B74 » par la société INTACE.
- 6 parts en poids commercial d'un agent biocide à base d'isothiazolin commercialisé sous la référence « MICROBIOCIDE B43F » par la société INTACE.

Les concentrations d'agent biocide B74 et B43F par rapport au bain total sont réglées à 0,2 %.
Le pH de la composition d'imprégnation est fixé à 6,07.
Une fois imprégné, le papier comporte un taux en poids commercial de produit biocide de 0,28 %, ce qui correspond à un taux en poids sec de produit biocide dans le papier d'environ 0,14 %.

EXEMPLE 8 comparatif :

On reprend un support selon l'exemple 1 que l'on imprègne dans un bac d'imprégnation contenant une composition réalisée en milieu aqueux qui comporte :

- 94 parts en poids commercial d'un liant PVA,
- 6 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 0,2 %.
Le pH de la composition d'imprégnation est fixé à 6,08.
Une fois imprégné, le papier comporte un taux en poids commercial de produit biocide de 0,15 %, ce qui correspond à un taux en poids sec de produit biocide dans le papier d'environ 0,08 %.

EXEMPLE 9 comparatif :

On reprend un support selon l'exemple 1 que l'on imprègne dans un bac d'imprégnation contenant une composition réalisée en milieu aqueux qui comporte :

- 86 parts en poids commercial d'un liant PVA,
- 14 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 0,5 %.
Le pH de la composition d'imprégnation est fixé à 6,08.
Une fois imprégné, le papier comporte un taux en poids commercial de produit biocide de 0,37 %, ce qui correspond à un taux en poids sec de produit biocide dans le papier d'environ 0,19 %.

EXEMPLE 10 comparatif :

On reprend un support selon l'exemple 1 que l'on imprègne dans un bac d'imprégnation contenant une composition réalisée en milieu aqueux qui comporte :

- 75parts en poids commercial d'un liant PVA,
- 25 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 1,0 %.
Le pH de la composition d'imprégnation est fixé à 6,08.
Une fois imprégné, le papier comporte un taux en poids commercial de produit biocide de 0,73 %, ce qui correspond à un taux en poids sec de produit biocide dans le papier d'environ 0,37 %.

EXEMPLE 11 comparatif :

On reprend un support selon l'exemple 1 que l'on imprègne dans un bac d'imprégnation contenant une composition réalisée en milieu aqueux qui comporte :

- 50 parts en poids commercial d'un liant PVA,
- 50 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 3,0 %.
Le pH de la composition d'imprégnation est fixé à 6,08.
Une fois imprégné, le papier comporte un taux en poids commercial de produit biocide de 2,22 %, ce qui correspond à un taux en poids sec de produit biocide dans le papier d'environ 1,1 %.

EXEMPLE 12 comparatif :

On reprend un support selon l'exemple 1 que l'on imprègne dans un bac d'imprégnation contenant une composition réalisée en milieu aqueux qui comporte :

- 75 parts en poids commercial d'un liant PVA,
- 25 parts en poids commercial d'un agent biocide à base de phénylphonolate de sodium commercialisé sous la référence « BACTOLYSE 74880 » par la société ONDEO.

La concentration d'agent biocide par rapport au bain total est réglée à 1,0 %.
Le pH de la composition d'imprégnation est fixé à 6,6.
Une fois imprégné, le papier comporte un taux en poids commercial de produit biocide de 0,72 %, ce qui correspond à un taux en poids sec de produit biocide dans le papier d'environ 0,36 %.

EXEMPLE 13 comparatif :

On reprend un support selon l'exemple 1 que l'on imprègne dans un bac d'imprégnation contenant une composition réalisée en milieu aqueux qui comporte :

- 80 parts en poids commercial d'un liant PVA,
- 20 parts en poids commercial d'un agent biocide à base de dérivé d'isothiazolone commercialisé sous la référence «SURFASEPT 74818 » par la société ONDEO.

La concentration d'agent biocide par rapport au bain total est réglée à 0,7 %.
Le pH de la composition d'imprégnation est fixé à 6,6.
Une fois imprégné, le papier comporte un taux en poids commercial de produit biocide de 0,525 %, ce qui correspond à un taux en poids sec de produit biocide dans le papier d'environ 0,26 %.

EXEMPLE 14 comparatif :

On reprend un support selon l'exemple 1 que l'on imprègne dans un bac d'imprégnation contenant une composition réalisée en milieu aqueux qui comporte :

- 97 parts en poids commercial d'un liant PVA,
- 3 parts en poids commercial d'un agent biocide à base de p-[(Diiodométhyl)sulfonyl]toluol commercialisé sous la référence « SURFASEPT 74859 » par la société ONDEO.

La concentration d'agent biocide par rapport au bain total est réglée à 0,1 %.

Le pH de la composition d'imprégnation est fixé à 6,8.

Une fois imprégné, le papier comporte un taux en poids commercial de produit biocide de 0,075 %, ce qui correspond à un taux en poids sec de produit biocide dans le papier d'environ 0,04 %.

EXEMPLE 15 selon l'invention :

On reprend un support selon l'exemple 1 que l'on imprègne dans un bac d'imprégnation contenant une composition réalisée en milieu aqueux qui comporte :

- 12,2 parts en poids commercial d'un liant PVA,
- 86,7 parts en poids commercial d'un liant Polyuréthane,
- 0,1 part en poids commercial d'un agent biocide à base de chlorure de didécyl diméthyl ammonium commercialisé sous la référence « MICROBIOCIDE B74 » par la société INTACE,
- 1,0 part en poids commercial d'un agent biocide à base d'iodopropynyl butylcarbamate commercialisé sous la référence « FUNGITROL 420 » par la société ISP.

Les concentrations d'agent biocide B74 et FUNGITROL 420 par rapport au bain total sont réglées respectivement à 0,05 % et 0,5 %.

Une fois imprégné, le papier comporte un taux en poids commercial de produit biocide respectivement de 0,04 % et de 0,4 %, ce qui correspond à un taux en poids sec de produit biocide dans le papier respectivement d'environ 0,02 % et d'environ 0,08 %.

EXEMPLE 16 selon l'invention :

On reprend un support selon l'exemple 1 que l'on enduit en surface à l'aide d'une presse encolleuse d'une composition réalisée en milieu aqueux qui comporte :

- 12,3 parts en poids commercial d'un liant PVA,
- 87.0 parts en poids commercial d'un liant Polyuréthane,
- 0,1 part en poids commercial d'un agent biocide à base de chlorure de didécyl diméthyl ammonium commercialisé sous la référence « MICROBIOCIDE B74 » par la société INTACE.
- 0,7 part en poids commercial d'un agent biocide à base d'iodopropynyl butylcarbamate commercialisé sous la référence « FUNGITROL 420 » par la société ISP.

Les concentrations d'agent biocide B74 et FUNGITROL 420 par rapport à la sauce d'enduction totale sont réglées respectivement à 0,05 % et 0,5 %.

Une fois enduit, le papier comporte un taux en poids commercial de produit biocide respectivement de 0,04 % et de 0,27 %, ce qui correspond à un taux en poids sec de produit biocide dans le papier respectivement d'environ 0,02 % et d'environ 0,05 %.

EXEMPLE 17 selon l'invention :

On reprend un support selon l'exemple 1 que l'on imprègne dans un bac d'imprégnation contenant une composition réalisée en milieu aqueux qui comporte :

- 98,4 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,

- 0,8 part en poids commercial d'un agent biocide à base de p-[(Diiodométhyl)sulfonyl]toluol commercialisé sous la référence « SURFASEPT 74859 » par la société ONDEO.

Les concentrations d'agent biocide B74 et SURFASEPT 74859 par rapport au bain total sont réglées respectivement à 0,05 % et 0,05 %.

Une fois imprégné, le papier comporte un taux en poids commercial de produit biocide respectivement de 0,04 % et de 0,04 %, ce qui correspond à un taux en poids sec de produit biocide dans le papier respectivement d'environ 0,02 % et d'environ 0,02 %.

EXEMPLE 18 selon l'invention :

On reprend un support selon l'exemple 1 que l'on enduit en surface à l'aide d'une presse encolleuse d'une composition réalisée en milieu aqueux qui comporte :

- 98,4 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 0,8 part en poids commercial d'un agent biocide à base de p-[(Diiodométhyl)sulfonyl]toluol commercialisé sous la référence « SURFASEPT 74859 » par la société ONDEO.

Les concentrations d'agent biocide B74 et SURFASEPT par rapport à la sauce d'enduction totale sont réglées respectivement à 0,05 % et 0,05 %.

Une fois enduit, le papier comporte un taux en poids commercial de produit biocide respectivement de 0,04 % et de 0,04 %, ce qui correspond à un taux en poids sec de produit biocide dans le papier respectivement d'environ 0,02 % et d'environ 0,015 %.

EXEMPLE 19 comparatif :

On reprend un support selon l'exemple 1 que l'on imprègne dans un bac d'imprégnation contenant une composition réalisée en milieu aqueux qui comporte :

- 95,9 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 3,3 parts en poids commercial d'un agent biocide à base de méthyl-1H-benzimidazol-2-ylcarbamate commercialisé sous la référence « SURFASEPT 74843 P » par la société AQUAZUR P&P.

Les concentrations d'agent biocide B74 et SURFASEPT 74843 P par rapport au bain total sont réglées respectivement à 0,05 % et 0,2 %.

Une fois imprégné, le papier comporte un taux en poids commercial de produit biocide respectivement de 0,04 % et de 0,15 %, ce qui correspond à un taux en poids sec de produit biocide dans le papier respectivement d'environ 0,02 % et d'environ 0,07%.

EXEMPLE 20 comparatif :

On reprend un support selon l'exemple 1 que l'on enduit en surface à l'aide d'une presse encolleuse d'une composition réalisée en milieu aqueux qui comporte :

- 96,1 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 3,1 parts en poids commercial d'un agent biocide à base de méthyl-1H-benzimidazol-2-ylcarbamate commercialisé sous la référence « SURFASEPT 74843 P » par la société AQUAZUR P&P.

Les concentrations d'agent biocide B74 et SURFASEPT 74843 P par rapport à la sauce d'enduction totale sont réglées respectivement à 0,05 % et 0,2 %.

Une fois enduit, le papier comporte un taux en poids commercial de produit biocide respectivement de 0,04 % et de 0,15 %, ce qui correspond à un taux en poids sec de produit biocide dans le papier respectivement d'environ 0,02 % et d'environ 0,06 %.

<u>EXEMPLE 21 comparatif :</u>

On reprend un support selon l'exemple 1 que l'on imprègne dans un bac d'imprégnation contenant une composition réalisée en milieu aqueux qui comporte :

- 60,9 parts en poids commercial d'un liant PVA,
- 38,1 parts en poids commercial d'un liant de type gélatine,
- 1,0 part en poids commercial d'un agent biocide à base d'un mélange de 1,2-benzoisotiazoline-3-one et de méthyl-1-(butylcarbomyl)-2-benzimidazolcarbamate commercialisé sous la référence « FBP-416 » par la société IPEL.

La concentration d'agent biocide par rapport au bain total est réglée à 1 %.

Une fois imprégné, le papier comporte un taux en poids commercial de produit biocide de 0,07 %, ce qui correspond à un taux en poids sec de produit biocide dans le papier d'environ 0,04 %.

**TESTS ET RESULTATS :**

On teste la résistance des supports au développement de champignons et de bactéries : ce qui correspond à un test à la fois fongistatique et bactériostatique.

Le test fongistatique, propre à la Demanderesse, utilise la méthode présentée en annexe.

Celle-ci s'inspire à la fois de la norme ASTM G21-90 et de la norme AFNOR NF X 41517.

Le test bactériostatique a consisté à évaluer la résistance des supports traités antibactérien à la croissance de microbes sous des conditions de contact dynamique. La méthode utilisée pour les exemples 1 à 14 est celle décrite dans la norme ASTM E 2149-01.

Elle consiste à mettre en contact le support traité dans une suspension bactérienne comprenant la souche à étudier sous agitation pendant respectivement une heure et 24 heures.

L'activité antibactérienne est définie par la détermination, dans la suspension bactérienne, du nombre d'unités formatrices de colonie avant et après le test.

On en déduit une perte d'activité microbienne, que l'on exprime en pourcentage.

La méthode utilisée pour les exemples 15 à 21 est celle décrite dans la norme XPG 39010.

Elle consiste à mettre en contact le support traité dans une suspension bactérienne comprenant la souche à étudier sous agitation pendant respectivement 0 heure et 24 heures.

L'activité antibactérienne est définie par la détermination, dans la suspension bactérienne, du nombre d'unités formatrices de colonie avant et après le test.

On en déduit une activité antibactérienne A, définie par la formule suivante :

$$A = \text{moyenne des } \log(E24i) - \text{moyenne des } \log(E0i),$$

Où E24i correspond au nombre d'UFC présentes sur l'éprouvette i à 24 h et E0i correspond au nombre d'UFC présentes sur l'éprouvette i juste après sa mise en contact avec l'agent antibactérien.

Dans les exemples 1 à 14, la souche étudiée a été l'Eschérichia Coli.

Dans les exemples 15 à 21, la souche étudiée a été le Staphylococcus aureus.

Les résultats à ces deux séries de tests ont été rassemblés dans le tableau 1, pour les exemples 1 à 14, et dans le tableau 2, pour les exemples 15 à 21.

Certains exemples, pour lesquels l'activité antibactérienne était plutôt faible, n'ont pas fait l'objet de tests bactériostatiques.

On constate que, pour la série des exemples 1 à 14, les exemples 6 et 7 sont particulièrement adaptés pour lutter contre la croissance des souches Eschérichia Coli.

Comparativement aux exemples 8 à 11, utilisant un autre agent biocide à base d'ammonium quaternaire, ils agissent rapidement et efficacement à des concentrations très faibles.

En ce qui concerne l'activité fongistatique, seuls les exemples 13 et 14 assurent une absence totale de développement de champignons.

Ils sont par contre inefficaces contre le développement bactérien.

Une addition conjuguée de l'agent biocide de l'exemple 6 et de l'exemple 14 est donc particulièrement recommandée pour aboutir à une protection biocide totale pour ledit support d'information.

En ce qui concerne la série des exemples 15 à 21, on constate que tous les agents biocides utilisés ont une action bactéricide assez poussée, étant donné que la totalité des UFC présentes sur les échantillons de papier a disparu 24 heures après sa mise en contact avec lesdits agents.

Leur pouvoir fongistatique est également important, à l'exception de l'exemple 21, pour lequel la Demanderesse a constaté de meilleurs résultats à des concentrations plus élevées.

Notamment, en partir d'un taux d'agent microbiocide

Les exemples donnés ne sont évidemment pas exhaustifs et d'autres supports de base et d'autres agents biocides pourront être envisagés sans sortir du champ de protection du brevet.

En particulier, le support de base pourra être un papier de sécurité haute durabilité objet de la demande de brevet FR 2 814 476, un papier impression/écriture, un calque ou un billet plastique.

**TABLEAU 1**

| EXEMPLE N° | TEST FONGISTATIQUE SUR MILIEU INERTE | | | | TEST BACTERIOSTATIQUE | |
|---|---|---|---|---|---|---|
| | 7 JOURS | | 14 JOURS | | pourcentage de réduction de l'activité de l'Eschérichia Coli (en %) | |
| | Recto | Verso | Recto | Verso | après 1 h | après 24 h |
| 1 | 4 | 4 | 4 | 4 | 0 | 0 |
| 2 | 4 | 4 | 4 | 4 | | |
| 3 | 2 | 3 | 4 | 4 | | |
| 4 | 4 | 4 | 4 | 4 | 80,6 | >99,9 |
| 5 | 4 | 4 | 4 | 4 | 80,6 | >99,9 |
| 6 | 1 | 1 | 3 | 3 | >99,9 | >99,9 |
| 7 | 1 | 1 | 3 | 2 | >99,9 | >99,9 |
| 8 | 4 | 4 | 4 | 4 | 87,4 | >99,9 |
| 9 | 4 | 4 | 4 | 4 | 92,7 | >99,9 |
| 10 | 4 | 4 | 4 | 4 | 99,5 | >99,9 |
| 11 | 4 | 4 | 4 | 4 | >99,9 | >99,9 |
| 12 | 1 | 1 | 3 | 4 | | |
| 13 | 0 | 0 | 1 | 3 | | |
| 14 | 0 | 0 | 0 | 0 | | |

**TABLEAU 2**

| EXEMPLE N° | TEST FONGISTATIQUE SUR MILIEU INERTE | | | | TEST BACTERIOSTATIQUE | | | | |
|---|---|---|---|---|---|---|---|---|---|
| | 7 JOURS | | 14 JOURS | | Après 0 heure | | Après 24 heures | | Activité antibactérienne A |
| | Recto | Verso | Recto | Verso | E0i | Log (E0i) | E24i | Log (E24i) | |
| 15 | 0 | 0 | 0 | 1 | 34100 | 4,53 | 0 | 0 | - 4,53 |
| 16 | 0 | 0 | 1 | 0 | 7200 | 3,86 | 0 | 0 | - 3,86 |
| 17 | 0 | 0 | 0 | 0 | 6300 | 3,80 | 0 | 0 | -3,80 |
| 18 | 1 | 1 | 3 | 3 | 189000 | 5,28 | 0 | 0 | - 5,28 |
| 19 | 0 | 0 | 0 | 0 | 89000 | 4,95 | 0 | 0 | - 4,95 |
| 20 | 0 | 0 | 1 | 1 | 49500 | 4,69 | 0 | 0 | - 4,69 |
| 21 | 2 | 2 | 2 | 3 | 100000 | 5 | 0 | 0 | -5 |

## TEST FONGISTATIQUE

**Principe** : le papier à tester est déposé sur une boîte de Pétri stérile, sur un milieu inerte, apportant de l'humidité à l'intérieur de la boîte, puis ensemencé avec un inoculum préparé avec un mélange de souches activées.

Les boîtes sont placées 14 jours à l'incubateur à 28 ° C, avec observation à 14 jours.

## I - LES SOUCHES UTILISEES :

10 souches différentes sont utilisées :

1) Chaetomium globosum
2) Myrothecium verrucaria
3) Stachybotrys atra
4) Cladosporium herbarum
5) Penicillium funicolosum
6) Trichoderma viride
7) Aspergillus niger
8) Aspergillus flavus
9) Aspergillus ustus
10) Paecilomyces variotii

## II - CONSERVATION DES SOUCHES :

Les souches sont conservées au réfrigérateur entre 3 et 5 °C.

## III - ESSAI :

A) Activation des souches

Lorsqu'un essai est programmé, la première opération consiste en l'activation des souches, deux semaines (entre 14 et 16 jours) avant le test. En effet, les souches étant conservées sur un milieu peu nutritif, il est nécessaire de les rendre plus actives, en les cultivant sur un milieu plus nutritif.

Suivant les souches, on utilise deux milieux :

Pour le Chaetomium globosum, le Stachybotrys atra, le Cladosporium herbarum et le Penicilium funicolosum, on utilise le milieu suivant :

| | |
|---|---|
| Flocons d'avoine | 50 g |
| Gélose en branche | 20 g |
| Eau distillée | 1000 ml |

Pour les autres souches, on utilise le milieu suivant :

| | |
|---|---|
| Maltéa Moser | 40 g |
| Peptone mycologique | 0,5 g |
| Gélose en branche | 20 g |
| Eau distillée | 1000 ml |

Au bout de 14 jours, les souches sont prêtes pour être utilisées.

B) Milieux d'essai :

le milieu se compose de :

| | |
|---|---|
| $NH_4NO_3$ | 3 g |
| KCl | 0,25 g |
| $MgSO_4\ 7H_2O$ | 0,5 g |

(suite)

| KH$_2$PO$_4$ | 1 g |
| Agar | 20 g |
| Eau | 1000 ml |

Le pH est ajusté à 5,5 environ.

C'est un milieu inerte servant de support aux éprouvettes.

On stérilise 30 minutes à la cocotte minute le milieu, dans des erlens cotonnés, puis on coule la gélose dans des boîtes en polystyrène stérile.

En parallèle, on stérilise un erlen vide recouvert d'une gaze, puis d'un bouchon de coton et un erlen contenant 100 ml d'eau distillée.

C) Mise en route du test

On découpe deux éprouvettes/faces minimum, soit quatre boîtes/essai.

On les place dans une pochette plastique séparément jusqu'à la mise en boîte.

Les éprouvettes sont des disques de 33 mm de diamètre, découpées à l'emporte-pièce.

On dépose les éprouvettes au centre de la boîte sur la gélose, à l'aide d'une pince dans les règles d'aseptie.

On étiquette les boîtes.

Préparation de l'inoculum :

On mélange les souches.

La concentration de chaque souche doit être d'environ $10^6$ ($10^5$ à $10^7$), mesurée avec la cellule de Thoma, ce qui représente 1 à 10 conidies par carré.

Après la vérification de la concentration, on mélange les souches dans l'erlen vide stérile, puis dans le pulvérisateur au préalable stérilisé à l'alcool.

D) Ensemencement

A l'aide du pulvérisateur, on ensemence la surface totale, c'est-à-dire éprouvette + gélose.

E) Incubation

On laisse agir pendant 14 jours à 28 °C avec saturation d'eau.

**IV - RESULTATS**

On caractérise l'envahissement du papier par un système de notation :

0 => pas d'attaque
1 => trace de développement fongique
2 => léger développement (10 à 30 %)
3 => développement moyen (30 à 60 %)
4 => fort développement (> 60 %)

**Revendications**

1. Support d'information à base de matériaux plastiques destiné à être manipulé relativement fréquemment, destiné à la fabrication d'un billet de banque, **caractérisé en ce qu'**il contient au moins du chlorure de didécyl diméthyl ammonium à titre d'agent bactériostatique et/ou bactéricide, et du p- [(Diiodométhyl) sulfonyl] toluol sous forme de dispersion aqueuse ou de l'iodopropynyl butylcarbamate sous forme de dispersion aqueuse à titre d'agent fongistatique et/ou fongicide.

2. Support d'information à base de matériaux plastiques destiné à être manipulé relativement fréquemment, destiné à la fabrication d'un billet de banque, **caractérisé en ce qu'**il contient au moins des ions argent à titre d'agent bactériostatique et/ou bactéricide et de l'iodopropynyl butylcarbamate sous forme de dispersion aqueuse à titre d'agent fongistatique et/ou fongicide.

**3.** Support d'information selon l'une des revendications précédentes, **caractérisé en ce que** la quantité en poids sec d'agents biocides dans le support est inférieure à 1 %, et de préférence inférieure à 0,2 %.

**4.** Support d'information selon l'une des revendications précédentes, **caractérisé en ce qu'**après une heure de contact dynamique du support avec une souche d'*Escherichia coli* ou de *Staphylococcus aureus,* le pourcentage de réduction de l'activité des souches correspondantes est supérieur à 99,9 %, dans les conditions définies par la méthode ASTM E 2149-01.

**5.** Support d'information selon l'une des revendications précédentes, **caractérisé en ce qu'**après 24 heures de contact dynamique du support avec une souche d'*Escherichia coli* ou de *Staphylococcus aureus,* l'activité antibactérienne définie par la méthode XPG 39010 est négative.

**6.** Procédé de fabrication d'un support d'information selon l'une des revendications précédentes, **caractérisé en ce qu'**au moins un mélange de deux agents biocides est incorporé à un support de base formé de matériaux plastiques.

**7.** Procédé de fabrication selon la revendication 6, **caractérisé en ce que** l'incorporation dudit mélange se fait par immersion dudit support de base dans une solution dudit mélange.

**8.** Procédé de fabrication selon la revendication 6, **caractérisé en ce que** l'incorporation dudit mélange se fait par pulvérisation dudit support de base avec une solution dudit mélange.

**9.** Procédé de fabrication selon la revendication 6, **caractérisé en ce que** l'incorporation dudit mélange se fait par impression dudit support de base à l'aide d'une encre contenant ledit mélange.

**10.** Procédé de fabrication selon la revendication 6, **caractérisé en ce que** l'incorporation dudit mélange se fait par surfaçage dudit support de base avec une solution contenant ledit mélange et un agent de surfaçage aqueux, l'agent de surfaçage aqueux incorporant de préférence de la glycérine comme plastifiant.

**11.** Procédé de fabrication selon la revendication 6, **caractérisé en ce que** l'incorporation dudit mélange se fait par couchage dudit support de base avec une solution de couchage contenant ledit mélange.

**12.** Procédé de fabrication selon la revendication 6, **caractérisé en ce que** l'incorporation dudit mélange se fait par dépôt sur ledit support de base d'un vernis de surimpression contenant ledit mélange.

**13.** Procédé de fabrication selon la revendication 6, **caractérisé en ce que** l'incorporation dudit mélange se fait par enduction de microcapsules ou de cyclodextrine contenant ledit mélange sur ledit support de base.

**Patentansprüche**

**1.** Informationsträger auf Basis von Kunststoffmaterialien, dazu ausgelegt, relativ häufig gehandhabt zu werden, dazu ausgelegt, zur Herstellung von Banknoten verwendet zu werden,
**dadurch gekennzeichnet, dass** es ein Chlorid aus Didecyldimethyl-ammonium als bakteriostatisches und / oder bakterizides Mittel enthält und p-[(Diiodomethyl) sulfonyl] - Toluol als wässrige Dispersion oder Iodopropynylbutylcarbamat als wässrige Dispersion als fungistatisches und / oder fungizides Mittel.

**2.** Informationsträger auf Basis von Kunststoffmaterialien, dazu ausgelegt, relativ häufig gehandhabt zu werden, dazu ausgelegt, zur Herstellung von Banknoten verwendet zu werden,
**dadurch gekennzeichnet, dass** es wenigstens Silberionen als bakteriostatisches und / oder bakterizides Mittel enthält und Iodopropynylbutylcarbamat als wässrige Dispersion als fungistatisches und / oder fungizides Mittel

**3.** Informationsträger nach dem vorhergehenden Anspruch,
**dadurch gekennzeichnet, dass** die Menge der bioziden Mittel in dem Träger im Trockengewicht weniger als 1% beträgt, vorzugsweise weniger als 0,2%.

**4.** Informationsträger nach einem der vorhergehenden Ansprüche, **dadurch gekennzeichnet, dass** nach einer Stunde des dynamischen Kontakts des Trägers mit einem Stamm von *Escherichia coli* oder *Staphylococcus aureus* die prozentuale Verringerung der Aktivität der entsprechenden Stämme unter den von der ASTM E 2149-01 Methode definierten Bedingungen mehr als 99,9% beträgt.

**5.** Informationsträger nach einem der vorhergehenden Ansprüche, **dadurch gekennzeichnet, dass** nach 24 Stunden des dynamischen Kontakts des Trägers mit einem Stamm von *Escherichia coli* oder *Staphylococcus aureus* die antibakterielle Aktivität, definiert gemäß der Methode XPG 39010, negativ ist.

**6.** Verfahren zur Herstellung eines Informationsträgers nach einem der vorhergehenden Ansprüche, **dadurch gekennzeichnet, dass** eine Mischung aus zwei bioziden Mitteln einem Grundträger hinzugefügt wird, der aus Kunststoffmaterialien gebildet ist.

**7.** Verfahren zur Herstellung nach Anspruch 6, **dadurch gekennzeichnet, dass** das Hinzufügen der Mischung durch Eintauchen des Grundträgers in eine Lösung der Mischung erfolgt.

**8.** Verfahren zur Herstellung nach Anspruch 6, **dadurch gekennzeichnet, dass** das Hinzufügen der Mischung durch bestäuben des Grundträgers mit einer Lösung der Mischung erfolgt.

**9.** Verfahren zur Herstellung nach Anspruch 6, **dadurch gekennzeichnet, dass** das Hinzufügen der Mischung durch Bedrucken des Grundträgers mit Hilfe einer Farbe, welche die Mischung enthält, erfolgt.

**10.** Verfahren zur Herstellung nach Anspruch 6, **dadurch gekennzeichnet, dass** das Hinzufügen der Mischung durch Oberflächenbehandlung des Grundträgers mit einer Lösung erfolgt, welche die Mischung und ein wässriges Oberflächenbehandlungsmittel enthält, wobei das Oberflächenbehandlungsmittel vorzugsweise Glyzerin als Weichmacher enthält.

**11.** Verfahren zur Herstellung nach Anspruch 6, **dadurch gekennzeichnet, dass** das Hinzufügen der Mischung durch Beschichten des Grundträgers mit einer Beschichtungslösung erfolgt, welche die Mischung enthält.

**12.** Verfahren zur Herstellung nach Anspruch 6, **dadurch gekennzeichnet, dass** das Hinzufügen der Mischung durch das Aufbringen eines Aufdrucklacks erfolgt, welcher die Mischung enthält.

**13.** Verfahren zur Herstellung nach Anspruch 6, **dadurch gekennzeichnet, dass** das Hinzufügen der Mischung durch Beschichtung des Grundträgers mit Mikrokapseln oder mit Cyclodextrinen erfolgt, welche die Mischung enthalten.

**Claims**

**1.** Information medium based on plastic materials intended to be handled relatively frequently, intended for manufacturing a bank note, **characterised in that** it contains at least didecyl dimethyl ammonium chloride as a bacteriostatic agent and/or bactericide and p-[(diiodomethyl) sulfonyl] toluol in the form of an aqueous dispersion or iodopropynyl butylcarbamate in the form of an aqueous dispersion as a fungistatic agent and/or fungicide.

**2.** Information medium based on plastic materials intended to be handled relatively frequently, intended for manufacturing a bank note, **characterised in that** it contains at least silver ions as a bacteriostatic agent and/or bactericide and iodopropynyl butylcarbamate in the form of an aqueous dispersion as a fungistatic agent and/or fungicide.

**3.** Information medium according to one of the previous claims, **characterised in that** the amount of biocide agents in the medium in dry weight is less than 1%, preferably less than 0.2%.

4. Information medium according to one of the previous claims, **characterised in that** after an hour of dynamic contact of the medium with a strain of *Escherichia coli* or *Staphylococcus aureus* the percentage reduction in the activity of the relevant strains is greater than 99.9% under the conditions defined by the ASTM E2149-01 method.

5. Information medium according to one of the previous claims, **characterised in that** after 24 hours of dynamic contact of the medium with a strain of *Escherichia coli* or *Staphylococcus aureus* the antibacterial activity defined by the XPG 39010 method is negative.

6. Method for manufacturing an information medium according to one of the previous claims, **characterised in that** at least one mixture of two biocide agents is incorporated in a basic medium made of plastic materials.

7. Method for manufacture according to claim 6, **characterised in that** this mixture is incorporated by immersing this basic medium in a solution of this mixture.

8. Method for manufacture according to claim 6, **characterised in that** this mixture is incorporated by spraying this basic medium with a solution of this mixture.

9. Method for manufacture according to claim 6, **characterised in that** this mixture is incorporated by printing this basic medium using an ink containing this mixture.

10. Method for manufacture according to claim 6, **characterised in that** this mixture is incorporated by surface coating this basic medium with a solution containing this mixture and an aqueous surface coating agent, the aqueous surface coating agent preferably incorporating glycerine as a plasticizer.

11. Method for manufacture according to claim 6, **characterised in that** this mixture is incorporated by coating this basic medium with a coating solution containing this mixture.

12. Method for manufacture according to claim 6, **characterised in that** this mixture is incorporated by depositing an overprint varnish containing this mixture on this basic medium.

13. Method for manufacture according to claim 6, **characterised in that** this mixture is incoporated by coating this basic medium with microcapsules or cyclodextrin containing this mixture.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5962137 A
- JP 6313269 A
- US 6093407 A
- WO 9542658 A
- EP 59056 A
- FR 2814476